# EUROPEAN PATENT SPECIFICATION

(11) **EP 2 675 209 B1**
(45) Date of publication and mention of the grant of the patent: **22.04.2020**
(21) Application number: 11858261.8
(22) Date of filing: 10.02.2011
(51) Int. Cl.: H04W 28/04, H04W 74/08

(54) **WIRELESS DATA TRANSMISSION METHOD, COMMUNICATION SYSTEM, WIRELESS TERMINAL DEVICE AND WIRELESS BASE STATION DEVICE**
DRAHTLOSES DATENÜBERTRAGUNGSVERFAHREN, KOMMUNIKATIONSSYSTEM, DRAHTLOSES ENDGERÄT UND DRAHTLOSE BASISSTATIONSVORRICHTUNG
PROCÉDÉ DE TRANSMISSION DE DONNÉES SANS FIL, SYSTÈME DE COMMUNICATIONS, DISPOSITIF DE TERMINAL SANS FIL ET DISPOSITIF DE STATION DE BASE SANS FIL

(43) Date of publication of application: 18.12.2013
(73) Proprietor: Fujitsu Limited, Kawasaki-shi, Kanagawa 211-8588 (JP)
(72) Inventor: KAWASAKI, Yoshihiro, Kawasaki-shi Kanagawa 211-8588 (JP); OHTA, Yoshiaki, Kawasaki-shi Kanagawa 211-8588 (JP)
(74) Representative: Haseltine Lake Kempner LLP
(86) International application number: PCT/JP2011/052916
(87) International publication number: WO 2012/108045

(56) References cited:
- EP-A1- 2 124 488
- WO-A1-2008/111606
- JP-A- 2008 244 526
- JP-A- 2010 502 065
- US-A1- 2009 270 094
- US-A1- 2010 085 929
- "Uplink synchronization", 3GPP TSG RAN WG2 #57 12TH ? 16TH FEBRUARY 2007 ST. LOUIS, USA, XX, XX , no. R2-070781 12 February 2007 (2007-02-12), pages 1-3, XP008135975, Retrieved from the Internet: URL:http://www.3gpp.org/ftp/tsg_ran/WG2_RL 2/TSGR2_57/Documents/

## Description

### FIELD

Embodiments discussed herein relate to radio data transmission between a radio terminal apparatus and a radio base station apparatus.

### BACKGROUND

A technique is known by which a reply signal indicating whether or not a received signal has been successfully decoded is transmitted to a transmission-side communication apparatus. An example of such a reply signal is an acknowledgement (ACK) signal/negative acknowledgement (NACK) signal.

An apparatus which transmits a signal is referred to as a first communication apparatus. An apparatus which receives the signal is referred to as a second communication apparatus. Furthermore, a radio link which transmits signals from the first communication apparatus to the second communication apparatus is referred to as a first link. A radio signal link which transmits signals from the second communication apparatus to the first communication apparatus is referred to as a second link.

When a signal is transmitted on the first link from the first communication apparatus to the second communication apparatus, the second communication apparatus receives and decodes the signal. When the second communication apparatus successfully decodes the signal, i.e., when the signal has been correctly transmitted, the second communication apparatus transmits an acknowledgement signal to the first communication apparatus via the second link. Upon failing to decode the signal, the second communication apparatus transmits a negative acknowledgement signal to the first communication apparatus via the second link.

A base station apparatus is known which includes an uplink synchronization management unit which manages an uplink synchronization maintenance state of a mobile station apparatus and a transmission unit which transmits a synchronization recovery request to the mobile station apparatus in the uplink synchronization maintenance state.

A connection processing method has been proposed which involves preparing two types of random access channels, i.e., a synchronous random access channel and an asynchronous random access channel and determining the status of a mobile station in each case depending on whether or not temporal synchronization of the mobile station has been established and whether or not any resource has been assigned to the mobile station. According to this method, a connection process is carried out for each case by adaptively selecting one of the synchronous random access channels, the asynchronous random access channel, and an uplink shared control channel. The synchronous random access channel is permitted to be used only when synchronization is established in a time region of a radio link. The asynchronous random access channel is permitted to be used regardless of the status of the synchronization of the radio link in the time region.

Furthermore, a method and an apparatus for detecting a defect (or radio link failure) in the radio link on the uplink and downlink in a radio communication system have been proposed. The method and apparatus determine whether the radio link has a synchronized status or a synchronization loss status, and when the synchronization loss status is detected, declare a defect in the radio link.

In an LTE (Long-Term Evolution) system to which the present invention is applicable and for which 3GPP has been developing specifications, the synchronization of radio transmit signals on the radio uplink is maintained in the time region. In this case, the difference between a certain time reference point and timing when a radio signal transmitted by a mobile station is received by a reception unit of a base station is set to fall within a predetermined range. When the difference from the reception timing is equal to or less than a certain value, possible interference with transmit signals between mobile stations can be reduced, thus improving radio uplink characteristics. Synchronization is maintained by a base station by notifying a mobile station of the amount by which timing when the mobile station transmits a signal is adjusted. The synchronization status is determined using a timer provided both in the mobile station and in the base station. When the mobile station receives a control signal indicating the transmission timing amount, the value of the timer (elapsed time) is initialized. When the counter of the timer (elapsed time) exceeds a certain value, the base station determines that the radio synchronization on the uplink has been lost. The base station constantly measures the timing when the base station receives a signal transmitted by the mobile station. When the difference between the reception timing and the time reference point increases, the base station transmits the control signal for transmission timing adjustment to the mobile station. However, when the amount of data transmitted by the mobile station and thus the amount of data generated by the mobile station decrease, the base station may intentionally interrupt the transmission of the control signal for transmission timing adjustment and leave the uplink for the mobile station asynchronous. In the radio uplink in the LTE system, when the radio synchronization for the uplink is lost, the terminal is permitted to carry out transmission only on the asynchronous random access channel.

### PRIOR ART DOCUMENTS

Patent document 1: International Publication Pamphlet No. 2008/155935
Patent document 2: International Publication Pamphlet No. 2007/139188
Patent document 3: Japanese National Publication of International Patent Application No. 2009-536502
Patent document 4: US 2010/0085929 A1

Patent document 4 discloses a mobile station, radio base station and synchronization establishing method, in which a mobile station is configured to establish uplink synchronization with a radio base station. The mobile station does not return a transmission ACK for downlink data until receiving a command for adjusting uplink communication, when the base station allocates a radio resource for transmission of downlink data to the mobile station.

EP 2,124,488 A1 describes a mobile station device which transmits a random access preamble to a base station device and performs uplink timing alignment based on the synchronization timing deviation information included in a random access response which the base station device transmits in response to the transmitted random access preamble.

### SUMMARY

In a communication system in which reply signals are transmitted in the synchronous channel on the above-described second link, a failure to synchronize the synchronous channel precludes transmission by the second communication apparatus of reply signals. In this case, the first communication apparatus delays the start of the transmission of the signals for the second communication apparatus until synchronization is established in the synchronous channel on the second link for the second communication apparatus. This may disadvantageously delay the transmission of signals from the first communication apparatus to the second communication apparatus. The synchronous channel as used herein refers to a radio channel used only when radio synchronization is established and does not refer to a radio channel used to acquire synchronization.

An object of an apparatus and a method disclosed herein is to reduce a possible delay in signal transmission resulting from a failure to establish the synchronization of the synchronous channel, on which a notification indicating whether or not a signal has been successfully decoded is transmitted.

According to aspects embodiments, there are provided methods for radio data transmission, communication systems, radio terminal apparatuses and radio base station apparatuses, all as defined in the claims. The claims define the scope of the invention.

The apparatus and method disclosed herein reduce a possible delay in signal transmission resulting from a failure to establish the synchronization of the synchronous channel, on which a notification indicating whether or not a signal has been successfully decoded is transmitted.

The object and advantages of the invention will be realized and attained by means of the elements and combinations particularly pointed out in the claims. It is to be understood that both the foregoing general description and the following detailed description are exemplary and explanatory and are not restrictive of the invention, as claimed.

### BRIEF DESCRIPTION OF THE DRAWINGS

FIG. 1 is a diagram depicting an example of configuration of a communication system.
FIG. 2 is a diagram depicting an example of a channel structure of a second link.
FIG. 3 is a diagram illustrating an example of hardware configuration of a first communication apparatus.
FIG. 4 is a diagram of configuration of a first example of the first communication apparatus.
FIG. 5 is a diagram of configuration of a first example of a second communication apparatus.
FIG. 6 is a diagram illustrating a first example of processing carried out in the communication system.
FIG. 7 is a diagram of configuration of an example of processing carried out in the first communication apparatus.
FIG. 8 is a diagram of configuration of an example of processing carried out in the second communication apparatus.
FIG. 9 is a diagram of configuration of a first illustrative example of the first communication apparatus.
FIG. 10 is a diagram of configuration of an example of a synchronization establishment unit of the first communication apparatus.
FIG. 11 is a diagram of configuration of a first illustrative example of the second communication apparatus.
FIG. 12 is a diagram of configuration of an example of a synchronization establishment unit of the second communication apparatus.
FIG. 13 is a diagram illustrating a second example of processing carried out in the communication system.
FIG. 14 is a diagram of configuration of a second illustrative example of the first communication apparatus.
FIG. 15 is a diagram of configuration of a second illustrative example of the second communication apparatus.
FIG. 16 is a diagram illustrating a third example of processing carried out in the communication system.
FIG. 17 is a diagram illustrating a fourth example of processing carried out in the communication system.

### DESCRIPTION OF EMBODIMENTS

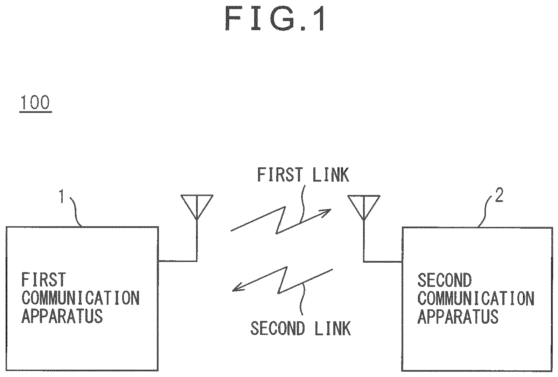

Preferred embodiments will be illustrated below with reference to the attached drawings. FIG. 1 is a diagram depicting an example of configuration of a communication system. A communication system 100 includes a first communication apparatus 1 and a second communication apparatus 2. A first link is formed between the first communication apparatus 1 and the second communication apparatus 2 so that, on the first link, signals are transmitted from the first communication apparatus 1 to the second communication apparatus 2 by radio communication. Furthermore, a second link is formed between the first communication apparatus 1 and the second communication apparatus 2 so that, on the second link, signals are transmitted from the second communication apparatus 2 to the first communication apparatus 1 by radio communication.

For example, the first communication apparatus 1 and the second communication apparatus 2 may be a radio base station apparatus and a radio terminal apparatus, respectively, in a mobile communication system. In this case, the first link is a downlink, i.e., a radio link from the radio base station apparatus to the radio terminal apparatus, and the second link is an uplink, i.e., a radio link from the radio terminal apparatus to the radio base station apparatus. For example, the first communication apparatus 1 and the second communication apparatus 2 may be a radio terminal apparatus and a radio base station apparatus, respectively. In this case, the first link is an uplink, and the second link is a downlink. However, the description herein is not intended to limit the first communication apparatus 1 and the second communication apparatus 2 to the radio base station apparatus and the radio terminal apparatus. The communication system 100 disclosed herein is applicable to various communication systems.

The communication system 100 is designed such that the channel structure of the second link includes at least a synchronous channel and an asynchronous random access channel. On the synchronous channel, the second communication apparatus 2 transmits signals to the first communication apparatus 1 within the ranges of frequency bands and time frames pre-assigned to the second communication apparatus 2.

On the asynchronous random access channel, the second communication apparatus 2 can transmit signals to the first communication apparatus 1 as needed within the ranges of frequency bands and time frames preliminarily secured for the random access channel from the radio resources of the second link. The radio resources for the asynchronous random access channel are separated from the radio resources for the synchronous channel on the second link. This prevents signals on the asynchronous random access channel from conflicting with signals on the synchronous channel.

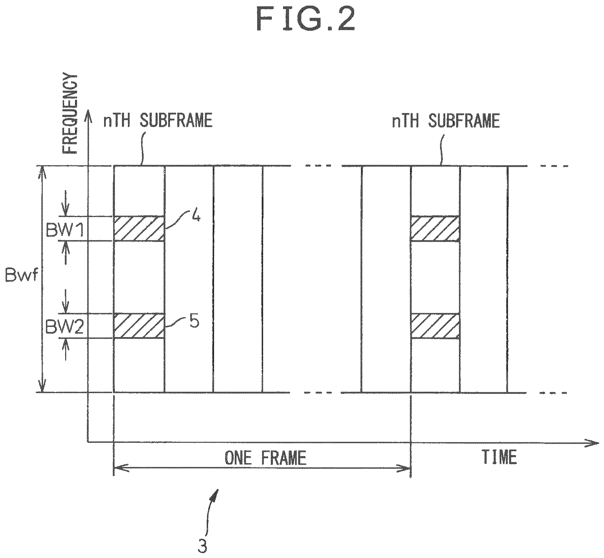

FIG. 2 is a diagram depicting an example of the channel structure of the second link. The channel structure of the second link has a time frame 3 with a system bandwidth Bwf. Predetermined frequency bands are assigned to radio resources 4 and 5 of the asynchronous random access channel in a predetermined subframe in a frame 3 repeated at a constant period. In an example depicted in FIG. 2, frequency bands BW1 and BW2 in the nth subframe are assigned to the radio resources 4 and 5 of the asynchronous random access channel. Furthermore, regions other than the radio resources 4 and 5 are assigned to the synchronous channel.

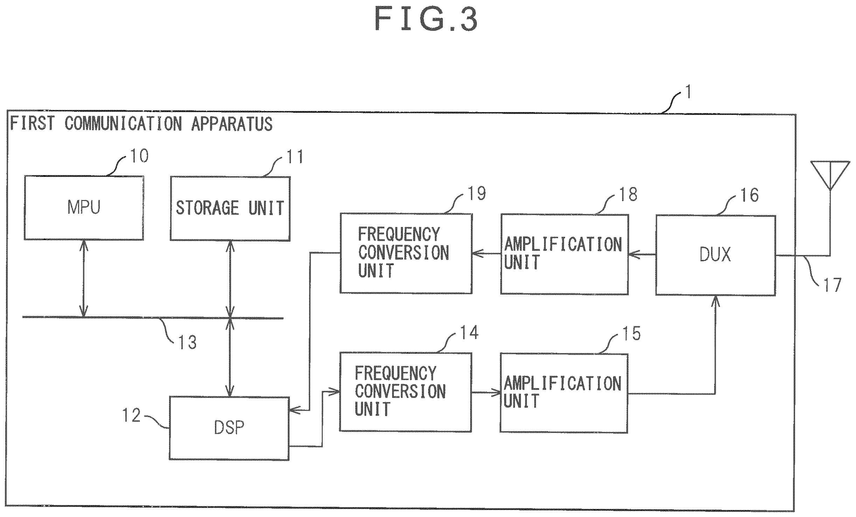

FIG. 3 is a diagram illustrating an example of hardware configuration of the first communication apparatus 1. The first communication apparatus includes a microprocessor 10, a storage unit 11, a digital signal processor 12, and a bus 13. Furthermore, the first communication apparatus 1 includes frequency conversion units 14 and 19, amplification units 15 and 18, a duplexer 16, and an antenna 17. In the following description and drawings, the microprocessor, the digital signal processor, and the duplexer are sometimes referred to as an "MPU", a "DSP", and a "DUX", respectively.

The MPU 10, the storage unit 11, and the DSP 12 are connected together by the bus 13. The storage unit 11 stores various programs and data for controlling operation of the first communication apparatus 1. The storage unit 11 may include a memory, a hard disk, or a nonvolatile memory.

The MPU 10 carries out processes for controlling the operation of the first communication apparatus 1 by executing a program stored in the storage unit 11. Furthermore, the DSP 12 carries out processes mainly regarding radio communication with the second communication apparatus 2 by executing a program stored in the storage unit 11. The storage unit 11 stores the programs executed by the MPU 10 and the DSP 12 and data temporarily used by the programs.

When the first communication apparatus 1 is a radio base station apparatus, the first communication apparatus 1 may include a higher apparatus which controls the first communication apparatus 1, a higher node apparatus which connects the first communication apparatus 1 to a core network, and a network processor which carries out processes of transmitting and receiving signals to and from other radio base station apparatuses.

The frequency conversion unit 14 converts a signal generated by the DSP 12 and transmitted from the first communication apparatus 1 to the second communication apparatus 2, into a radio frequency. The amplification unit 15 amplifies the radio frequency signal. The amplified signal is transmitted via the DUX 16 and the antenna 17.

The radio signal transmitted by the second communication apparatus 2 is received at the antenna 17. The received signal is input to the amplification unit 18 via the DUX 16. The amplification unit 18 amplifies the received signal. The frequency conversion unit 19 converts the amplified received signal with the radio frequency into a baseband signal. The baseband signal is processed by the DSP 12.

The second communication apparatus 2 may also have a configuration similar to a configuration depicted in FIG. 3. The hardware configuration depicted in FIG. 3 is only an example of a hardware configuration that implements the first communication apparatus 1 and the second communication apparatus 2. Any other hardware configuration may be adopted provided that the configuration carries out processing described herein.

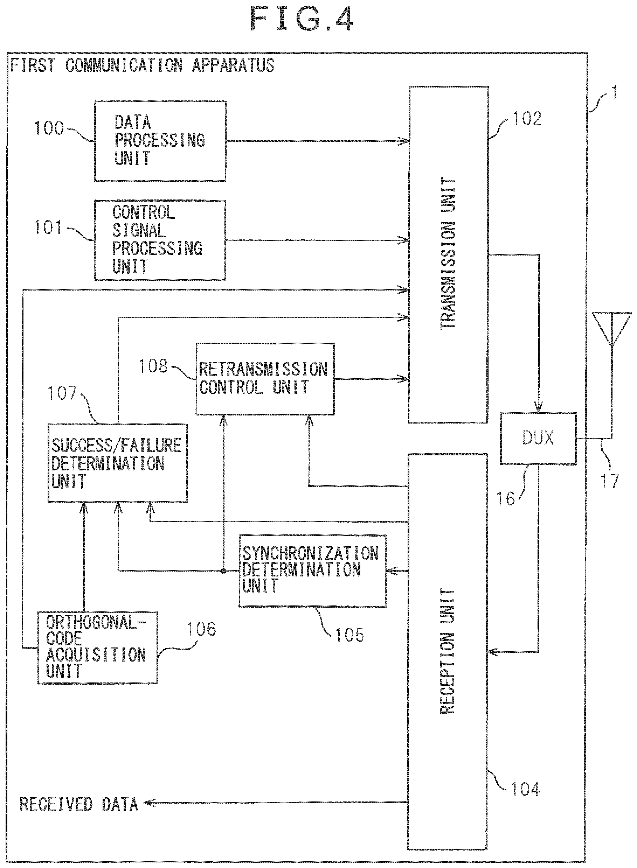

FIG. 4 is a diagram of a configuration of a first example of the first communication apparatus. The MPU 10 and DSP 12 in FIG. 3 carry out information processing using components depicted in FIG. 4 by executing the programs stored in the storage unit 11. This also applies to other embodiments of the first communication apparatus 1. FIG. 4 mainly depicts functions regarding the following description. Thus, the first communication apparatus 1 may include components other than the depicted components.

The first communication apparatus 1 includes a data processing unit 100, a control information processing unit 101, a transmission unit 102, the DUX 16, the antenna 17, and a reception unit 104. The first communication apparatus 1 includes a synchronization determination unit 105, an orthogonal-code acquisition unit 106, a success/failure determination unit 107, and a retransmission control unit 108.

The data processing unit 100 processes data to be transmitted from the first communication apparatus 1 to the second communication apparatus 2. The data processing unit 100 encodes the data and outputs the encoded data. For example, when the first communication apparatus 1 is a radio base station apparatus, the first communication apparatus 1 may receive data to be transmitted to the second communication apparatus 2, from a higher node apparatus, encode the data, and output the encoded data. For example, when the first communication apparatus 1 is a radio terminal apparatus, the data processing unit 100 may generate data to be transmitted to the second communication apparatus 2, encode the data, and output the encoded data.

The control information processing unit 101 generates a control signal to be transmitted to the second communication apparatus 2, encodes the control signal in accordance with a predetermined rule, and outputs the encoded control signal. The control signal may be information that allows the second communication apparatus 2 to demodulate and decode transmit data transmitted by the first communication apparatus 1. Such information may specify a data coding scheme and radio resources for use in data transmission, for example.

The transmission unit 102 modulates and multiplexes data output by the data processing unit 100 and control information output by the control information processing unit 101. The transmission unit 102 then transmits the modulated and multiplexed data and control information via the DUX 16 and the antenna 17.

A received signal received from the second communication apparatus 2 via the antenna 17 is input to the reception unit 104 via the DUX 16. The reception unit 104 demodulates and decodes the received signal from the second communication apparatus 2 which are assigned to the respective radio resources in the second link.

A transmit signal from the second communication apparatus 2 contains an orthogonal code. The transmit signal is transmitted on the asynchronous random access channel in the second link, and may be referred to as a random access signal. The orthogonal code is an example of a pattern for random access. The second communication apparatus 2 determines whether or not a signal received from the first communication apparatus 1 via the first link has been successfully decoded. The second communication apparatus 2 modulates the orthogonal signal sequence depending on whether or not decoding has been successful, and transmits the modulated orthogonal signal via the asynchronous random access channel. The reception unit 104 outputs the orthogonal code received from the second communication apparatus 2 to the success/failure determination unit 107.

In the description herein, the data output by the data processing unit 100 is taken as an example of a signal transmitted from the first communication apparatus 1 to the second communication apparatus 2 and for which the second communication apparatus 2 determines whether or not decoding has been successful. The signal for which the second communication apparatus 2 determines whether or not decoding has been successful is sometimes referred to as "transmit data" in order to be distinguished from other signals. However, the description herein is not intended to limit the signal for which the second communication apparatus 2 determines whether or not decoding has been successful, to a particular type of signal.

Transmit signals from the second communication apparatus 2 include reply signals transmitted on the synchronous channel in the second link. The reply signals are an acknowledgement (ACK) signal and a negative acknowledgement (NACK) signal which indicate whether or not the transmit data received from the first communication apparatus 1 via the first link has been successfully decoded by the second communication apparatus 2. The reception unit 104 outputs the reply signal received from the second communication apparatus 2, to the retransmission control unit 108.

The synchronization determination unit 105 determines whether or not the synchronization of the synchronous channel on the second link between the first communication apparatus 1 and the second communication apparatus 2 has been established. For example, the synchronization determination unit 105 may determine the establishment of synchronization based on whether or not the second communication apparatus 2 is continuously transmitting data via the synchronous channel on the second link. However, a method for synchronization determination carried out by the synchronization determination unit 105 need not be the above-described method. The synchronization determination unit 105 may use another method to determine whether or not the synchronization of the synchronous channel has been established. The synchronization determination unit 105 outputs the result of the determination to the success/failure determination unit 107.

The orthogonal-code acquisition unit 106 acquires information on an orthogonal signal sequence which is identical to the orthogonal signal sequence transmitted by the second communication apparatus 2 and which have not been modulated by the second communication apparatus 2 yet. For example, the orthogonal-code acquisition unit 106 may identify the orthogonal signal sequence in accordance with orthogonal-code specification information shared with the second communication apparatus 2.

The orthogonal-code specification information may be, for example, sequence indication information indicating a code sequence corresponding to an orthogonal code. For example, the orthogonal code may be a CAZAC (Constant Amplitude Zero Auto-Correlation) sequence. When the orthogonal code is a CAZAC sequence, the sequence indication information may be, for example, a sequence number and a cyclic shift amount.

The orthogonal-code acquisition unit 106 may generate an orthogonal signal sequence in accordance with the orthogonal-code specification information. Furthermore, a plurality of orthogonal signal sequences may be stored in a storage apparatus so that an orthogonal signal sequence specified by the orthogonal-code specification information can be read from the storage apparatus. The orthogonal-code specification information may be the orthogonal code itself.

The orthogonal-code acquisition unit 106 may transmit the orthogonal-code specification information to the second communication apparatus 2 via the transmission unit 102 so that the second communication apparatus 2 can acquire the same code as the orthogonal code acquired by the orthogonal-code acquisition unit 106. The orthogonal-code acquisition unit 106 outputs the acquired orthogonal code to the success/failure determination unit 107. The orthogonal-code specification information is an example of a signal indicating a pattern for random access. The first communication apparatus 1 may transmit the orthogonal-code specification information to the second communication apparatus 2 before transmitting data. The first communication apparatus 1 may transmit the orthogonal-code specification information to the second communication apparatus 2 while simultaneously transmitting data.

When the synchronization of the synchronous channel on the second link has not been established, the success/failure determination unit 107 determines whether or not transmit data transmitted from the first communication apparatus 1 to the second communication apparatus 2 via the first link has been successfully decoded, based on the modulated orthogonal signal sequence in the signal received from the second communication apparatus 2 and the non-modulated orthogonal code acquired by the orthogonal-code acquisition unit 106.

For example, the second communication apparatus 2 may modulate the orthogonal signal sequence by multiplying the orthogonal signal sequence by a code with a value varying depending on whether or not decoding has been successful. Thus, the orthogonal signal sequence transmitted by the second communication apparatus 2 is generated based on whether or not decoding has been successful and the orthogonal-code specification information. The success/failure determination unit 107 can determine whether or not the decoding has been successful by multiplying the modulated orthogonal signal sequence by the original orthogonal signal sequence to detect one of two code sequences depending on whether or not decoding has been successful. Thus, the modulated orthogonal signal sequence is used as a reply signal indicating whether or not decoding has been successful. For example, the second communication apparatus 2 multiplies the original orthogonal signal sequence by a code bit "1" when decoding has been successful or by a code bit "-1" when decoding has failed. Multiplying the modulated orthogonal signal sequence by the original orthogonal signal sequence results in a multiplied code sequence "1, 1... 1" when decoding has been successful or in a multiplied code sequence "-1, -1... -1" when decoding has failed.

The success/failure determination unit 107 notifies the transmission unit 102 of the result of the determination. For example, the transmission unit 102 may retransmit the data having failed to be decoded, to the second communication apparatus 2.

When the synchronization of the synchronous channel on the second link has been established, the retransmission control unit 108 receives, from the reception unit 104, one of the acknowledgement (ACK) signal and the negative acknowledgement (NACK) signal which has been transmitted by the second communication apparatus 2. When the reply signal transmitted by the second communication apparatus 2 is the negative acknowledgment (NACK) signal, the retransmission control unit 108 may instruct the transmission unit 102 to retransmit the data having failed to be decoded, to the second communication apparatus 2.

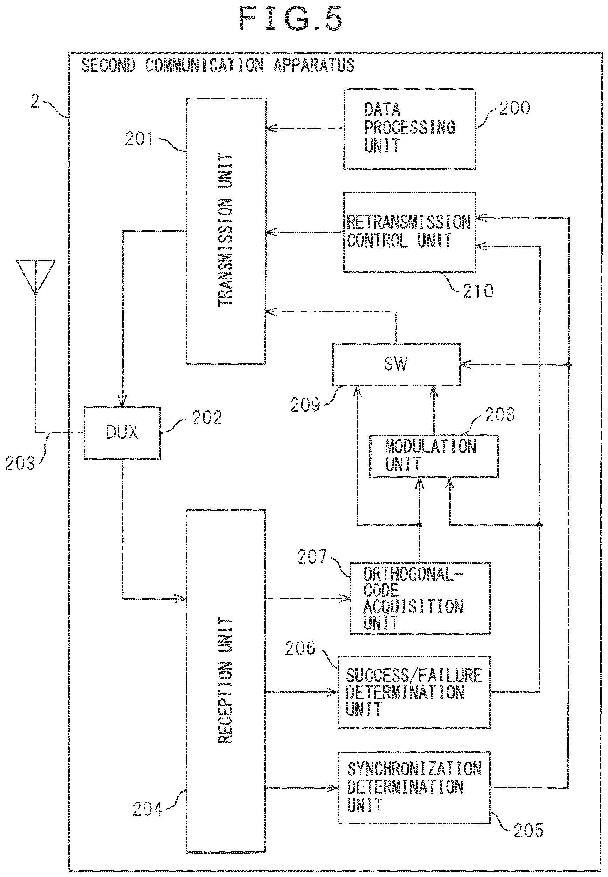

The configuration and functions of the second communication apparatus 2 will now be illustrated. FIG. 5 is a diagram of configuration of a first example of the second communication apparatus 2. The MPU 10 and DSP 12 in FIG. 3 carry out information processing using components depicted in FIG. 5 by executing the programs stored in the storage unit 11. This also applies to other embodiments of the second communication apparatus 2. FIG. 5 mainly depicts functions regarding the following description. Thus, the second communication apparatus 2 may include components other than the depicted components.

The second communication apparatus 2 includes a data processing unit 200, a transmission unit 201, a DUX 202, an antenna 203, and a reception unit 204. The second communication apparatus 2 includes a synchronization determination unit 205, a success/failure determination unit 206, an orthogonal-code acquisition unit 207, a modulation unit 208, a switch 209, and a retransmission control unit 210. In the attached drawings, the switch is sometimes denoted as "SW".

The data processing unit 200 processes data to be transmitted from the second communication apparatus 2 to the first communication apparatus 1. The data processing unit 200 encodes the data and outputs the encoded data. For example, when the second communication apparatus 2 is a radio terminal apparatus, the data processing unit 200 may generate data to be transmitted to the first communication apparatus 1, encode the data, and output the encoded data. For example, when the second communication apparatus 2 is a radio base station apparatus, the second communication apparatus 2 may receive data to be transmitted to the first communication apparatus 1, from a higher node apparatus, encode the data, and output the encoded data.

The transmission unit 201 modulates and multiplexes data output by the data processing unit 200, an orthogonal code selected by the switch 209, illustrated below, and reply signals output by the retransmission control unit 210, illustrated below. At this time, the transmission unit 201 assigns the radio resources of the asynchronous random access channel on the second link for the transmission of an orthogonal signal sequence. The transmission unit 201 assigns the radio resources of the synchronous channel on the second link for the transmission of reply signals. The transmission unit 201 transmits multiplexed signals via the DUX 202 and the antenna 203.

A received signal received from the first communication apparatus 1 via the antenna 203 is input to the reception unit 204 via the DUX 202. The reception unit 204 demodulates and decodes the received signals from the first communication apparatus 1 which are assigned to the respective radio resources in the first link, in accordance with control information transmitted by the first communication apparatus 1.

The success/failure determination unit 206 determines whether or not the reception unit 204 has successfully decoded the received data from the first communication apparatus 1. The success/failure determination unit 206 outputs the result of the determination to the switch 209 and the retransmission control unit 210.

The synchronization determination unit 205 determines whether or not the synchronization of the synchronous channel between the first communication apparatus 1 and the second communication apparatus 2 on the second link has been established. For example, the synchronization determination unit 205 may determine a loss of synchronization based on whether or not the reception of a signal for correction of transmission timing on the synchronous channel has been stopped, the signal being transmitted by the first communication apparatus 1. However, a method for synchronization determination carried out by the synchronization determination unit 205 need not be the above-described method. The synchronization determination unit 205 may use another method to determine whether or not the synchronization of the synchronous channel has been established. The synchronization determination unit 205 outputs the result of the determination to the modulation unit 208 and the retransmission control unit 210.

The orthogonal-code acquisition unit 207 acquires an orthogonal signal sequence to be transmitted to the first communication apparatus 1 via the asynchronous random access channel. For example, the orthogonal-code acquisition unit 207 may identify the orthogonal signal sequence in accordance with the orthogonal-code specification information shared with the first communication apparatus 1. The orthogonal-code acquisition unit 207 may share the orthogonal-code specification information with the first communication apparatus 1 by acquiring the orthogonal-code specification information transmitted by the first communication apparatus 1.

The orthogonal-code acquisition unit 207 may generate an orthogonal signal sequence in accordance with the orthogonal-code specification information. Furthermore, a plurality of orthogonal codes may be stored in a storage apparatus so that an orthogonal code specified by the orthogonal-code specification information can be read from the storage apparatus. Additionally, the orthogonal-code specification information may be the orthogonal code itself. The orthogonal-code acquisition unit 207 outputs the acquired orthogonal signal sequence to the modulation unit 208 and the switch 209.

The modulation unit 208 modulates the orthogonal signal sequence, depending on whether or not the transmit data from the first communication apparatus 1 has been successfully decoded. For example, the modulation unit 208 may modulate the orthogonal signal sequence by multiplying the original orthogonal signal sequence by a code with a value varying depending on whether or not decoding has been successful. For example, the second communication apparatus 2 multiplies the original orthogonal signal sequence by the code bit "1" when decoding has been successful or by the code bit "-1" when decoding has failed.

The modulation unit 208 outputs the modulated orthogonal signal sequence to the switch 209. The modulation unit 208 may be configured so as to modulate the orthogonal signal sequence only when the synchronization of the synchronous channel on the second link has not been established and to avoid modulating the orthogonal signal sequence when the synchronization has been established.

When the synchronization of the synchronous channel on the second link has not been established, the switch 209 selects the orthogonal signal sequence modulated by the modulation unit 208. When the synchronization of the synchronous channel on the second link has been established, the switch 209 selects the non-modulated orthogonal signal sequence output by the orthogonal-code acquisition unit 207. The switch 209 inputs the selected orthogonal signal sequence to the transmission unit 201.

The second communication apparatus 2 may be configured to transmit the orthogonal signal sequence modulated depending on whether or not the transmit data from the first communication apparatus 1 has been successfully decoded, regardless of whether or not the synchronization of the synchronous channel on the second link has been established. In this case, the switch 209 may be omitted.

The retransmission control unit 210 generates a reply signal depending on whether or not the transmit data from the first communication apparatus 1 has been successfully decoded. The retransmission control unit 210 inputs the reply signal to the transmission unit 201.

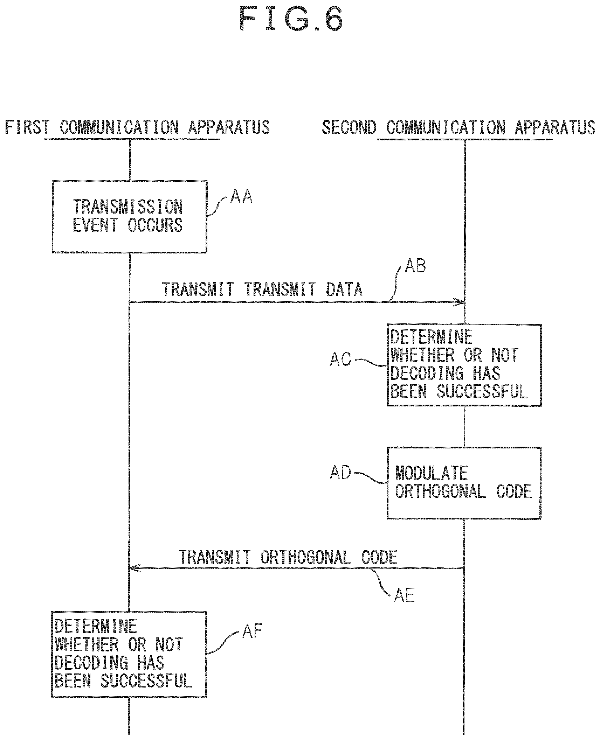

General processing carried out in the communication system 100 will now be illustrated. FIG. 6 is a diagram illustrating a first example of processing carried out in the communication system 100. In other embodiments, operations AA to AF described below may be steps.

In the operation AA, with the synchronization of the synchronous channel on the second link not established yet, an event occurs where the first communication apparatus 1 transmits transmit data to the second communication apparatus 2. For example, the data processing unit 200 of the first communication apparatus 1 acquires, from a higher node, transmit data to be transmitted to the second communication apparatus 2. Furthermore, for example, the data processing unit 200 generates transmit data to be transmitted to the second communication apparatus 2. In the operation AB, the transmission unit 102 of the first communication apparatus 1 transmits the transmit data to the second communication apparatus 2 via the first channel.

In the operation AC, the reception unit 204 of the second communication apparatus 2 attempts to demodulate and decode the transmit data received via the first channel. The success/failure determination unit 206 determines whether or not the decoding has been successful. In the operation AD, the modulation unit 208 modulates the orthogonal signal sequence depending on whether or not the decoding has been successful. The switch 209 inputs the modulated orthogonal signal sequence to the transmission unit 201.

In the operation AE, the transmission unit 201 transmits the modulated orthogonal signal sequence to the first communication apparatus 1 on the asynchronous random access channel in the second channel. In the operation AF, the success/failure determination unit 107 determines whether or not the transmit data transmitted via the first channel has been successfully decoded based on the received orthogonal signal sequence and the non-modulated orthogonal code.

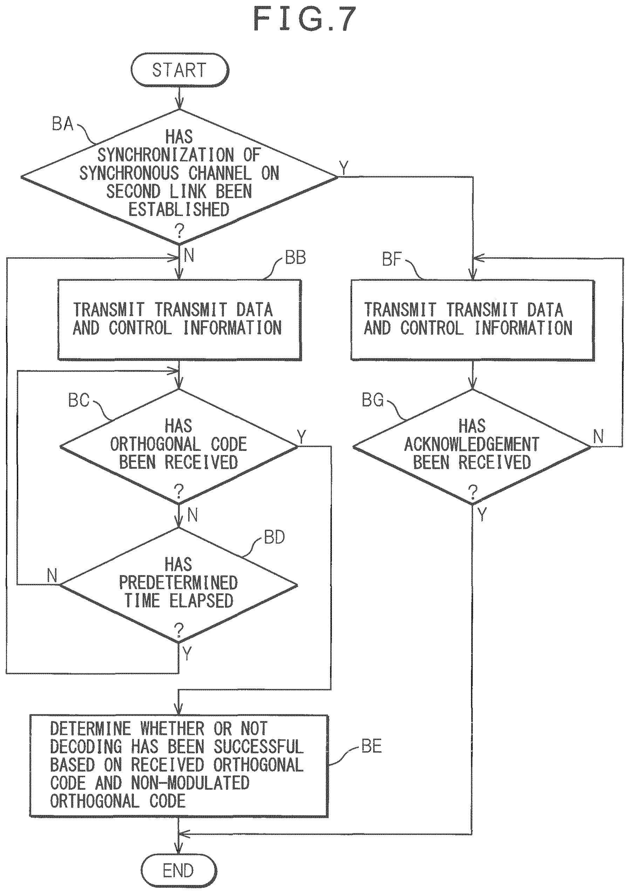

Processing carried out in each of the first communication apparatus 1 and second communication apparatus 2 in the communication system 100 will now be illustrated. FIG. 7 is a diagram illustrating an example of processing carried out in the first communication apparatus 1. In other embodiments, operations BA to BG described below may be steps.

In the operation BA, the synchronization determination unit 105 determines whether or not the synchronization of the synchronous channel on the second link has been established. When the synchronization has been established (operation BA: Y), the processing proceeds to the operation BF. When the synchronization has not been established (operation BA: N), the processing proceeds to the operation BB.

In the operation BB, the transmission unit 104 transmits the transmit data output by the data processing unit 100 and the control information received from the control information processing unit 101, to the second communication apparatus 2. In the operation BC, the reception unit 104 attempts to receive the orthogonal signal sequence transmitted on the asynchronous random access channel. When the orthogonal signal sequence has been received (operation BC: Y), the processing proceeds to the operation BE. When the orthogonal code has not been received (operation BC: N), the processing proceeds to the operation BD.

In the operation BD, the retransmission control unit 108 determines whether or not the orthogonal signal sequence has been received within a predetermined time. When the orthogonal signal sequence has not been received within the predetermined time (operation BD: Y), the processing returns to the operation BB. When the predetermined time has not elapsed yet (operation BD: N), the processing proceeds to the operation BC.

In the operation BE, the success/failure determination unit 107 determines whether or not the second communication apparatus 2 has successfully decoded the transmit data transmitted in the operation BB, based on the received orthogonal signal sequence and the non-modulated orthogonal signal sequence acquired by the orthogonal-code acquisition unit 106. When the transmit data has failed to be decoded, the transmission unit 102 retransmits the same data as the data having failed to be decoded.

In the operation BF, the transmission unit 104 transmits the transmit data output by the data processing unit 100 and the control information received from the control information processing unit 101, to the second communication apparatus 2. In the operation BG, the reception unit 104 receives the reply signal indicating whether or not the transmit data transmitted via the first channel has been successfully decoded. The retransmission control unit 210 determines whether or not the reply signal is an acknowledgement signal. When the reply signal is an acknowledgement signal (operation BG: Y), the processing ends. When the reply signal is a negative acknowledgement signal or no reply signal has been successfully received (operation BG: N), the processing returns to the operation BF.

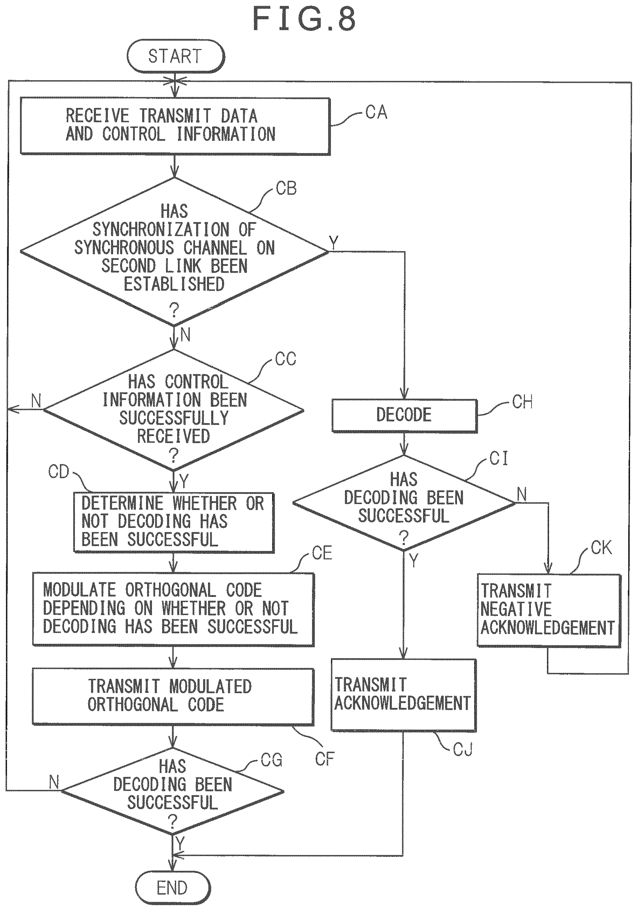

FIG. 8 is a diagram illustrating an example of processing carried out in the second communication apparatus 2. In other embodiments, operations CA to CK described below may be steps. In the operation CA, the reception unit 204 attempts to receive the transmit data and control information transmitted by the first communication apparatus 1.

In the operation CB, the synchronization determination unit 205 determines whether or not the synchronization of the synchronous channel on the second link has been established. When the synchronization has been established (operation CB: Y), the processing proceeds to the operation CH. When the synchronization has not been established (operation CB: N), the processing proceeds to the operation CC.

When the reception unit 204 has failed to receive the control information (operation CC: N), no processing is carried out on the signal received in the operation CA. In this case, the information on the success or failure of decoding of the transmit data fails to return to the first communication apparatus 1, and thus the first communication apparatus 1 retransmits the same data. Thus, the processing returns to the operation CA.

When the reception unit 204 has successfully received the control information (operation CC: Y), the processing proceeds to the operation CD. In the operation CD, the success/failure determination unit 206 determines whether or not the transmit data has been successfully decoded.

In the operation CE, the modulation unit 208 modulates the orthogonal signal sequence depending on whether or not the decoding has been successful. In the operation CF, the transmission unit 201 transmits the modulated orthogonal signal sequence to the first communication apparatus 1 via the asynchronous random access channel. When the transmit data has been successfully decoded (operation CG: Y), the processing ends. When the transmit data has failed to be decoded (operation CG: N), the first communication apparatus 1 retransmits the data. Thus, the processing returns to the operation CA.

In the operation CH, the reception unit 204 decodes the received transmit data. In the operation CI, the success/failure determination unit 206 determines whether or not the transmit data has been successfully decoded. When the transmit data has been successfully decoded (operation CI: Y), the processing proceeds to the operation CJ. When the transmit data has failed to be decoded (operation CI: N), the processing proceeds to the operation CK.

In the operation CJ, the retransmission control unit 210 generates an acknowledgement signal. The transmission unit 201 transmits the acknowledgement signal to the first communication apparatus via the synchronous channel. Then, the processing ends. In the operation CK, the retransmission control unit 210 generates a negative acknowledgement signal. The transmission unit 201 transmits the negative acknowledgement signal to the first communication apparatus via the synchronous channel. The first communication apparatus 1 retransmits the data, and thus, the processing returns to the operation CA.

According to the present embodiment, even when the synchronization of the synchronous channel has not been established, on which the reply signal indicating whether or not the transmit data has been successfully decoded is transmitted, a notification indicating whether or not the transmit data has been successfully decoded can be provided by modulating the orthogonal signal on the asynchronous random access channel. Thus, signals can be transmitted before the process of establishing the synchronization of the synchronous channel is completed. This enables a possible delay in signal transmission to be avoided.

Radio resources other than the radio resources of the synchronous channel are assigned to the asynchronous random access channel. Thus, the orthogonal signal sequence is prevented from conflicting with other signals transmitted on the synchronous channel. Furthermore, the orthogonal signal sequence avoids interfering with other orthogonal signal sequences flowing on the asynchronous random access channel. Thus, the second communication apparatus 2 can notify the first communication apparatus 1 of the success or failure of decoding without interfering with signals from other communication apparatuses transmitted on the second link.

The orthogonal signal sequence modulated by the second communication apparatus 2 based on whether or not decoding has been successful may be any orthogonal signal sequence as long as the signal sequence is transmitted through the asynchronous random access channel on the second link. For example, the second communication apparatus 2 may modulate a preamble signal used to establish the synchronization of the synchronous channel on the second link, based on whether or not decoding has been successful.

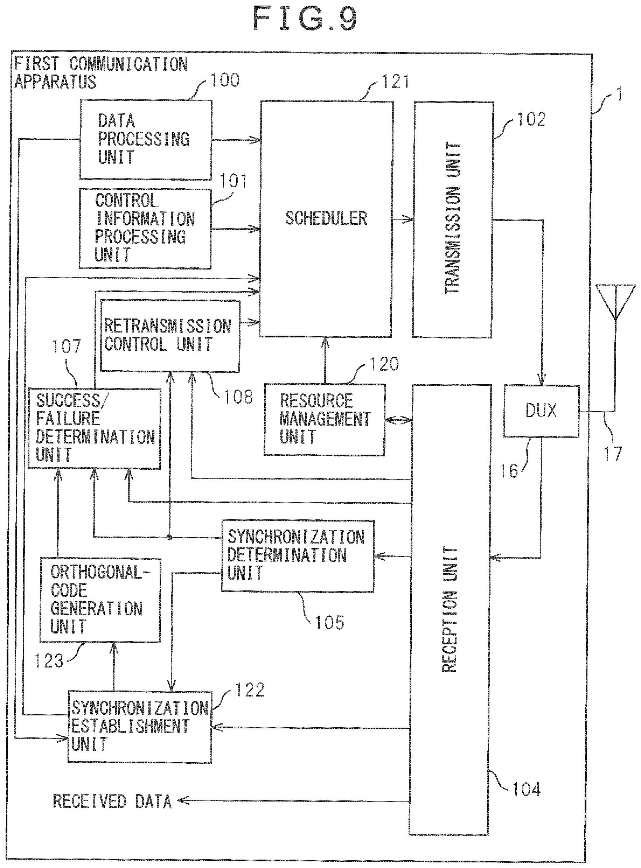

An illustrative example of modulation of the preamble signal based on whether or not decoding has been successful, which is not specifically claimed will be illustrated below. FIG. 9 is a diagram of a configuration of the illustrative example of the first communication apparatus 1. The same components as the corresponding components depicted in FIG. 4 are denoted by the same reference numerals. The components denoted by the same reference numerals perform the same operations unless otherwise specified. Furthermore, the components depicted in FIG. 4 and the functions of the components may be provided in other embodiments.

The first communication apparatus 1 includes a resource management unit 120, a scheduler 121, a synchronization establishment unit 122, and an orthogonal-code generation unit 123. The resource management unit 120 manages the radio resources of the first link and the second link between the first communication apparatus 1 and the second communication apparatus 2.

The resource management unit 120 assigns the radio resources of the second link separately to the synchronous channel and the asynchronous random access channel. The resource management unit 120 provides information on the current assignment status of the radio resources to the reception unit 104 and the scheduler 121.

Based on the information on the assignment status of the radio resources of the first link provided by the resource management unit 121, the scheduler 121 identifies radio resources used to transmit the transmit data output by the data processing unit 100 and the control information output by the control information processing unit 101. The transmission unit 102 modulates and multiplexes the transmit data and the control information based on instructions from the scheduler 121.

Furthermore, the transmission unit 102 multiplexes information on the assignment status of the radio resources of the second link assigned by the resource management unit 120, in transmit signals as control information. Based on the information on the assignment status of the radio resources of the second link, the reception unit 104 demodulates and decodes transmit signals from the second communication apparatus 2.

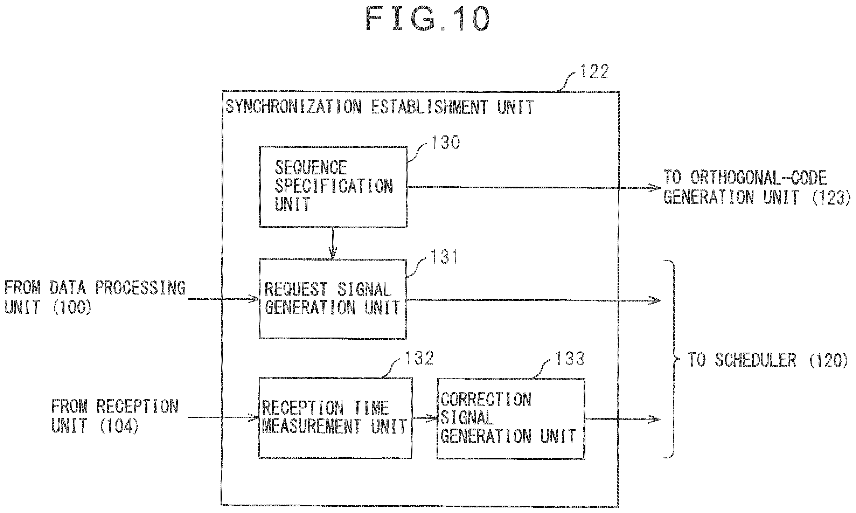

The synchronization establishment unit 122 carries out a process of establishing the synchronization of the synchronous channel on the second link. FIG. 10 is a diagram of configuration of an example of the synchronization establishment unit 122 of the first communication apparatus 1. The synchronization establishment unit 122 includes a sequence specification unit 130, a request signal generation unit 131, a reception time measurement unit 132, and a correction signal generation unit 133.

The sequence specification unit 130 specifies a code sequence of an orthogonal signal sequence for use as a preamble signal in the process of establishing the synchronization of the second link. The sequence specification unit 130 provides orthogonal-code specification information that specifies a code sequence of an orthogonal signal sequence, to the request signal generation unit 131 and the orthogonal-code generation unit 123.

When the data processing unit 100 notifies the request signal generation unit 131 that an event where transmit data is transmitted has occurred, the request signal generation unit 131 generates a request signal. The request signal requests the second communication apparatus 2 to transmit, via the asynchronous random access channel, the orthogonal signal sequence specified by the orthogonal-code specification information. The request signal generation unit 131 transmits the request signal to the second communication apparatus via the transmission unit 102 as a piece of the above-described control information.

The reception time measurement unit 132 measures the time of reception of the orthogonal signal sequence transmitted via the asynchronous random access channel and serving as a preamble signal. The correction signal generation unit 133 generates a correction signal that corrects timing for the transmission by the second communication apparatus in the synchronous channel on the second link according to the length of time from the time of transmission of the request signal until the time of reception of the orthogonal signal sequence. An example of the correction signal is, for example, TA (Timing Advance) information specified in LTE (Long Term Evolution) that is a communication scheme formulated by 3GPP (The 3rd Generation Partnership Project). The correction signal generation unit 133 transmits the correction signal to the second communication apparatus via the transmission unit 102 as a piece of the above-described control information. The correction signal is an example of timing adjustment information for establishing the synchronization of the synchronous channel on the second link.

Referring to FIG. 9, the orthogonal-code generation unit 123 generates the orthogonal signal sequence specified by the orthogonal-code specification information provided by the sequence specification unit 130. The orthogonal-code generation unit 123 outputs the orthogonal signal sequence to the success/failure determination unit 107.

The success/failure determination unit 107 determines whether or not the transmit data has been successfully decoded based on the modulated orthogonal signal sequence received from the second communication apparatus 2 and the non-modulated orthogonal signal sequence acquired by the orthogonal-code generation unit 123.

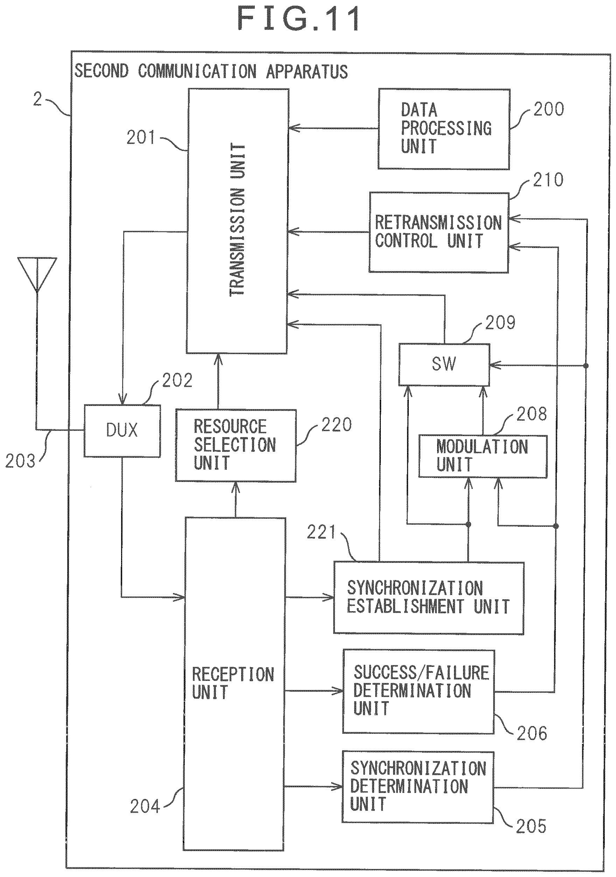

The configuration of the second communication apparatus 2 and processing carried out in the second communication apparatus 2 will now be illustrated. FIG. 11 is a diagram of configuration of an illustrative example of the second communication apparatus 2. The same components as the corresponding components depicted in FIG. 5 are denoted by the same reference numerals. The components denoted by the same reference numerals perform the same operations unless otherwise specified. Furthermore, the components depicted in FIG. 11 and the functions of the components may be provided in other embodiments. The second communication apparatus 2 includes a resource selection unit 220 and a synchronization establishment unit 221.

The reception unit 204 receives the information on the assignment status of the radio resources of the second link assigned by the resource management unit 120 of the first communication apparatus 1, the request signal requesting transmission of an orthogonal signal sequence as a preamble signal, and the correction signal, from the first communication apparatus 1 as control information.

The resource selection unit 220 manages the radio resources on the second link. The resource selection unit 220 acquires the information on the assignment status of the radio resources of the second link from the reception unit 204.

Based on the information on the assignment status provided by the resource selection unit 220, the transmission unit 201 modulates and multiplexes the data output by the data processing unit 200, the orthogonal code as a preamble signal, and the reply signal output by the retransmission control unit 210.

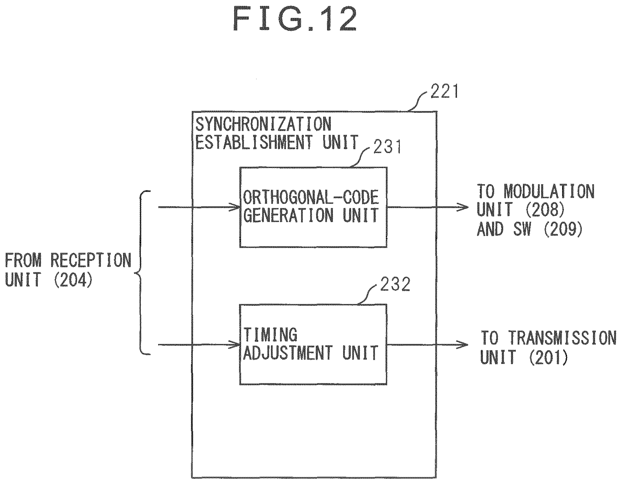

The synchronization establishment unit 221 carries out a process of establishing the synchronization of the synchronous channel on the second link. FIG. 12 is a diagram of configuration of an example of the synchronization establishment unit 221 of the second communication apparatus 2. The synchronization establishment unit 221 includes an orthogonal-code generation unit 231 and a timing adjustment unit 232. The orthogonal-code generation unit 231 generates the orthogonal signal sequence specified by the orthogonal-code specification information contained in the request signal. The orthogonal-code generation unit 231 outputs the orthogonal signal sequence to the modulation unit 208 and the switch 209.

The timing adjustment unit 232 corrects the timing for the transmission by the second communication apparatus in the synchronous channel on the second link in accordance with the correction signal. The timing adjustment unit 232 outputs a corrected transmission timing signal to the transmission unit 201. The transmission unit 201 transmits signals in the synchronous channel on the second link in accordance with the timing signal output by the timing adjustment unit 232.

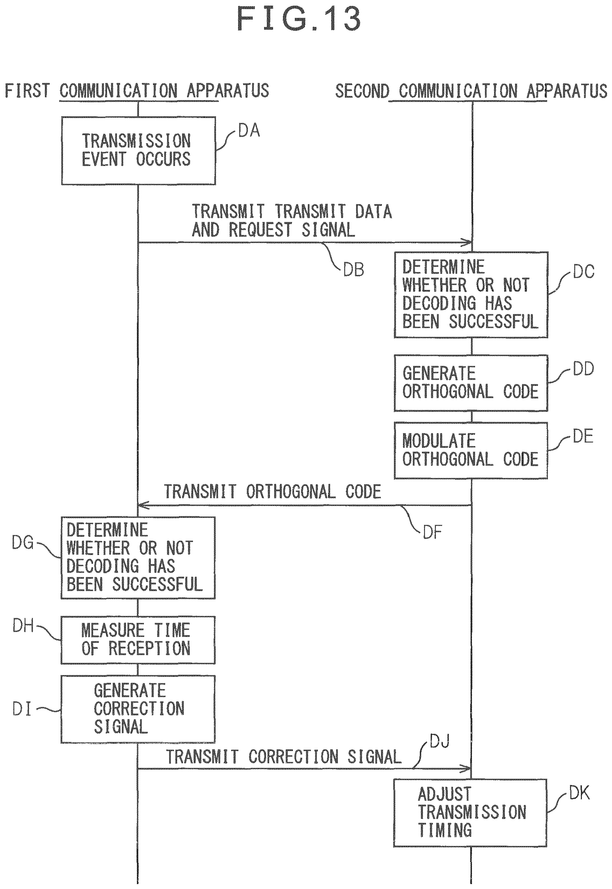

FIG. 13 is a diagram illustrating an illustrative example of processing carried out in the communication system 100. In other embodiments, operations DA to DK described below may be steps. In the operation DA, with the synchronization of the synchronous channel on the second link not established yet, an event occurs where the first communication apparatus 1 transmits transmit data to the second communication apparatus 2. In the operation DB, the transmission unit 102 of the first communication apparatus 1 transmits the transmit data and a request signal requesting the second communication apparatus 2 to transmit an orthogonal signal sequence as a preamble signal, to the second communication apparatus 2 via the first channel.

In the operation DC, the reception unit 204 of the second communication apparatus 2 attempts to demodulate and decode the transmit data. The success/failure determination unit 206 determines whether or not the decoding has been successful. In the operation DD, the orthogonal-code generation unit 231 generates an orthogonal signal sequence. In the operation DE, the modulation unit 208 modulates the orthogonal signal sequence depending on whether or not the decoding has been successful. In the operation DF, the transmission unit 201 transmits the modulated orthogonal signal sequence to the first communication apparatus 1 on the asynchronous random access channel of the second channel.

In the operation DG, the success/failure determination unit 107 determines whether or not the transmit data has been successfully decoded, based on the received orthogonal signal sequence and the non-modulated orthogonal signal sequence. In the operation DH, the transmission time measurement unit 132 measures the time of reception of the orthogonal signal sequence.

In the operation DI, the correction signal generation unit 133 generates a correction signal according to the length of time from the time of transmission of the request signal until the time of reception of the orthogonal signal sequence. In the operation DJ, the correction signal generation unit 133 transmits the correction signal to the second communication apparatus 2 via the transmission unit 102. In the operation DK, the timing adjustment unit 232 corrects the transmission timing in the synchronous channel on the second link in accordance with the correction signal.

Either one of the process in the operation DG and each of the processes in the operations DI to DK may be performed before the other.

According to the illustrative example, when transmit data for the second communication apparatus 2 is generated while the synchronization of the synchronous channel on the second link is not established, the transmit data can be transmitted when the second communication apparatus 2 is simultaneously requested to transmit a preamble signal in order to establish the synchronization. This reduces a possible delay in the transmission of the transmit data.

Furthermore, the illustrative example uses the preamble signal as an orthogonal signal sequence modulated depending on whether or not decoding has been successful. This reduces consumption of the radio resources.

Another illustrative example of the communication system 100 which is not specifically claimed will now be illustrated. According to the illustrative example illustrated below, when transmit data for the second communication apparatus 2 is generated while the synchronization of the synchronous channel on the second link is not established, the first communication apparatus 1 transmits the transmit data not later than the time of transmission of a correction signal for the timing for the transmission in the synchronous channel on the second link. Then, after the synchronization of the synchronous channel on the second link is established, the first communication apparatus 1 receives, via the synchronous channel, a reply signal indicating whether or not the transmit data has been successfully decoded.

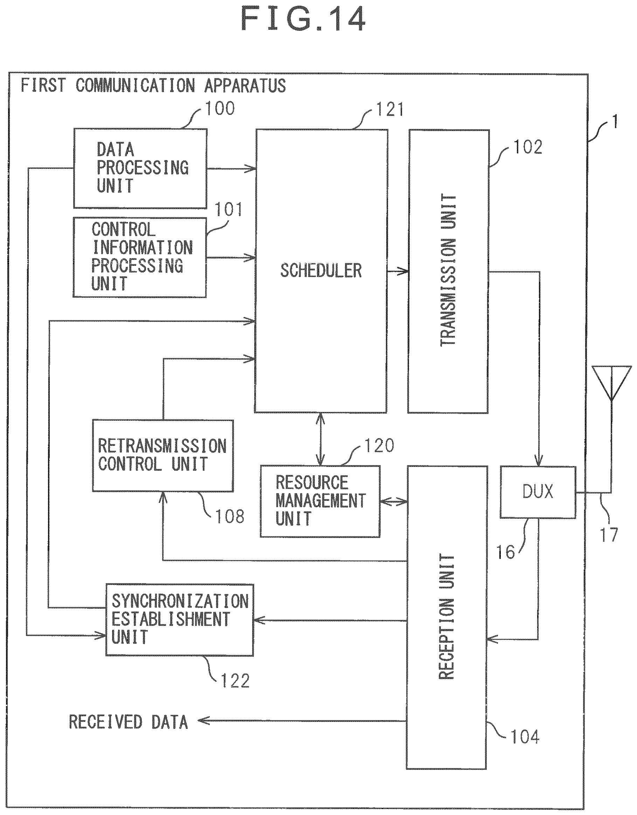

FIG. 14 is a diagram of configuration of a second illustrative example of the first communication apparatus 1. The same components of the second illustrative example as the corresponding components depicted in FIG. 9 are denoted by the same reference numerals. The components denoted by the same reference numerals perform the same operations unless otherwise specified. Furthermore, the components depicted in FIG. 14 and the functions of the components may be provided in other embodiments.

In a certain illustrative example, when the synchronization of the synchronous channel on the second link has not been established yet, the scheduler 121 delays the time of transmission of signals output by the data processing unit 100 until the time of transmission of the correction signal.

In another illustrative example, when the synchronization of the synchronous channel on the second link has not been established yet, the scheduler 121 transmits transmit data to the second communication apparatus 2 earlier than the time of transmission of the correction signal. The retransmission control unit 108 determines whether or not the transmit data transmitted before the synchronization has been successfully decoded, based on a reply signal received via the synchronous channel after the synchronization. Thus, the retransmission control unit 108 has a retransmission timeout time set therein which is longer than a duration accepted for a synchronization process carried out by the second communication apparatus 2.

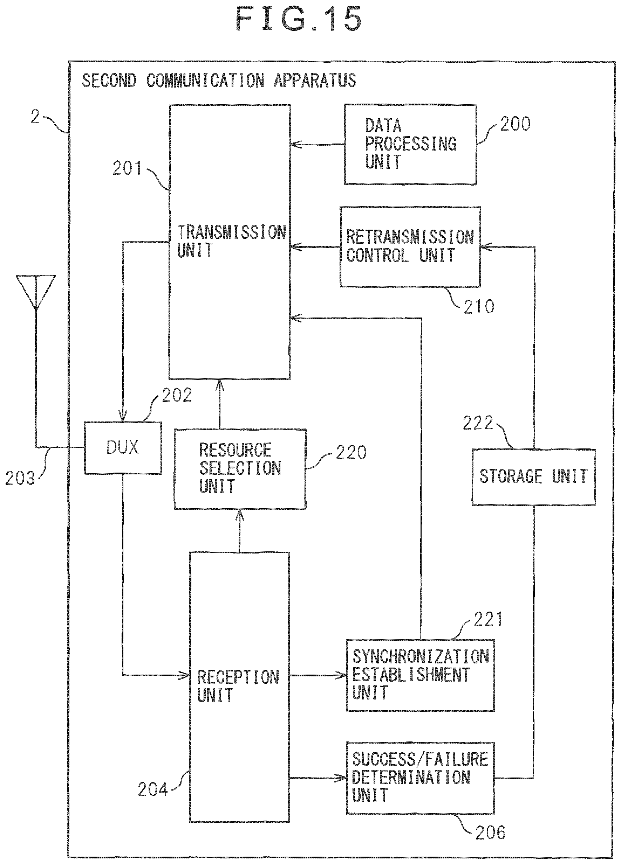

FIG. 15 is a diagram of configuration of a second illustrative example of the second communication apparatus 2. The same components of the second illustrative example as the corresponding components depicted in FIG. 11 are denoted by the same reference numerals. The components denoted by the same reference numerals perform the same operations unless otherwise specified. Furthermore, the components depicted in FIG. 15 and the functions of the components may be provided in other embodiments. The second communication apparatus 2 includes a storage unit 222 which stores the result of the determination by the success/failure determination unit 206.

The success/failure determination unit 206 stores information indicating whether or not data received while the synchronization of the synchronous channel on the second link is not established has been successfully decoded, in the storage unit 222 until the synchronization is established. The retransmission control unit 210 transmits a reply signal in accordance with the result of the determination stored in the storage unit 222 after the synchronization establishment unit 221 establishes the synchronization of the synchronous channel on the second link. According to the present embodiment, the orthogonal-code generation unit 231 of the synchronization establishment unit 221 outputs a generated orthogonal signal sequence to the transmission unit 201.

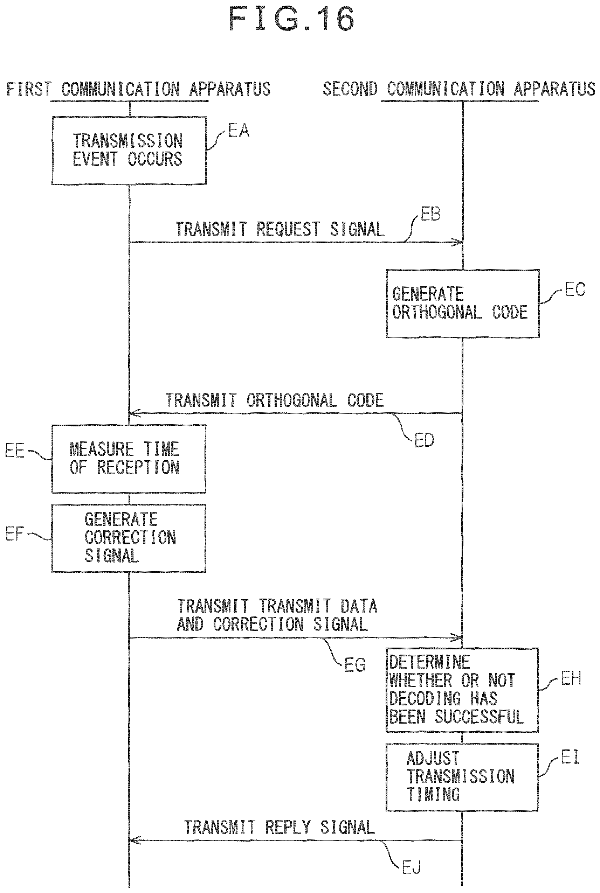

FIG. 16 is a diagram illustrating an illustrative example of processing carried out in the communication system 100 in FIG. 15 and FIG. 16. In other embodiments, operations EA to EJ described below may be steps.

In the operation EA, with the synchronization of the synchronous channel on the second link not established yet, an event occurs where the first communication apparatus 1 transmits transmit data to the second communication apparatus 2. In the operation EB, the transmission unit 102 of the first communication apparatus 1 transmits a request signal requesting the second communication apparatus 2 to transmit an orthogonal signal sequence as a preamble signal, to the second communication apparatus 2 via the first channel. At this time, the transmission unit 102 causes the operation of transmitting the transmit data to stand by.

In the operation EC, the orthogonal-code generation unit 231 generates an orthogonal signal sequence. In the operation ED, the transmission unit 201 transmits the orthogonal code to the first communication apparatus 1 on the asynchronous random access channel of the second channel.

In the operation EE, the transmission time measurement unit 132 measures the time of reception of the orthogonal signal sequence. In the operation EF, the correction signal generation unit 133 generates a correction signal according to the length of time from the time of transmission of the request signal until the time of reception of the orthogonal signal sequence.

In the operation EG, the correction signal generation unit 133 transmits the correction signal to the second communication apparatus 2 via the transmission unit 102. The transmission unit 102 transmits transmit data to the second communication apparatus 2 simultaneously with the transmission of the correction signal.

In the operation EH, the success/failure determination unit 206 determines whether or not the transmit data has been successfully decoded. In the operation EI, the timing adjustment unit 232 corrects the timing for transmission in the synchronous channel on the second link in accordance with the correction signal to establish the synchronization of the synchronous channel. Either one of the operations EH and EI may be performed before the other. In the operation EJ, the retransmission control unit 210 transmits a reply signal indicating whether or not the transmit data has been successfully decoded, to the first communication apparatus 1 via the synchronous channel.

According to the present illustrative example, the first communication apparatus 1 can transmit transmit data before the synchronization of the synchronous channel on the second link is established. This reduces a possible delay in the transmission of the transmit data.

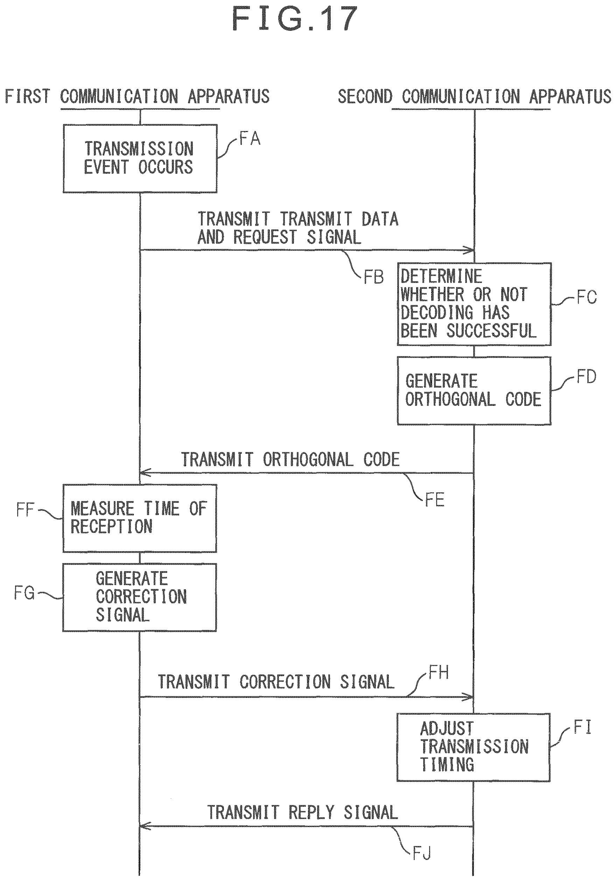

A second illustrative example of processing carried out in the communication system 100 in FIG. 15 and FIG. 16 will now be illustrated with reference to FIG. 17. In other examples, operations FA to FJ described below may be steps.

In the operation FA, with the synchronization of the synchronous channel on the second link not established yet, transmit data for the second communication apparatus 2 is generated. In the operation FB, the transmission unit 102 transmits the transmit data and a request signal to the second communication apparatus 2 via the first channel.

In the operation FC, the success/failure determination unit 206 determines whether or not the transmit data has been successfully decoded. The result of the determination is stored in the storage unit 222. In the operation FD, the orthogonal-code generation unit 231 generates an orthogonal code. In the operation FE, the transmission unit 201 transmits the orthogonal signal sequence to the first communication apparatus 1 on the asynchronous random access channel of the second channel.

In the operation FF, the transmission time measurement unit 132 measures the time of reception of the orthogonal signal sequence. In the operation FG, the correction signal generation unit 133 generates a correction signal according to the length of time from the time of transmission of the request signal until the time of reception of the orthogonal signal sequence. In the operation FH, the correction signal generation unit 133 transmits the correction signal to the second communication apparatus 2 via the transmission unit 102.

In the operation FI, the timing adjustment unit 232 corrects the timing for transmission in the synchronous channel on the second link in accordance with the correction signal to establish the synchronization of the synchronous channel. In the operation FJ, the retransmission control unit 210 transmits a reply signal indicating whether or not the transmit data has been successfully decoded, to the first communication apparatus 1 via the synchronous channel.

When transmit data for the second communication apparatus 2 is generated while the synchronization of the synchronous channel on the second link is not established, the transmit data can be transmitted when the second communication apparatus 2 is simultaneously requested to transmit a preamble signal in order to establish the synchronization. This reduces a possible delay in the transmission of the transmit data.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiment(s) of the present inventions have been described in detail, it should be understood that the various changes, substitutions, and alterations could be made hereto without departing from the scope of the invention.

### DESCRIPTION OF THE REFERENCE NUMERALS

- 1: First communication apparatus
- 2: Second communication apparatus
- 100: Communication system
- 102, 201: Transmission units
- 104: Reception units
- 105, 205: Synchronization determination units
- 107, 206: Success/failure determination unit
- 208: Modulation unit
- 209: Switch

## Claims

1. A method for radio data transmission in a radio communication system including a radio terminal apparatus (2) and a radio base station apparatus (1), the method comprising:
transmitting simultaneously, by the radio base station apparatus (1), a signal indicating a pattern for random access and data to be decoded by an asynchronous radio terminal apparatus (2) not synchronized with the radio base station apparatus (2) on an uplink to the asynchronous radio terminal apparatus (2) if an event occurs where the radio base station apparatus (1) transmits the data to the asynchronous radio terminal apparatus (2); and
transmitting, by the asynchronous radio terminal apparatus (2) to the radio base station apparatus (1) via a random access channel, a reply signal generated by modulating the pattern indicated by the signal for random access based on whether or not the data has been correctly decoded, the reply signal including a first modulated pattern if the data has been correctly decoded and a second modulated pattern, different to the first modulated pattern, if the data has not been correctly decoded.

2. The method for radio data transmission according to claim 1, wherein the pattern for the random access is a preamble for use in establishment of synchronization of a synchronous channel.

3. The method for radio data transmission according to claim 2, wherein the radio base station apparatus (1) transmits a request signal requesting transmission of the preamble in conjunction with the transmission of the data, to the asynchronous radio terminal apparatus (2).

4. A communication system (100) comprising a radio base station apparatus (1) and a radio terminal apparatus (2),
wherein the radio base station apparatus (1) comprises a transmission unit (201) configured to simultaneously transmit a signal indicating a pattern for random access and data to be decoded by the radio terminal apparatus (2) to the radio terminal apparatus (2) if an event occurs where the radio base station apparatus (1) transmits the data to the radio terminal apparatus (2), wherein the radio terminal apparatus (2) is not synchronized with the radio base station apparatus (1) on an uplink; and
the radio terminal apparatus (2) comprises a transmission unit (102) configured to transmit, to the radio base station apparatus (1) via a random access channel, a reply signal generated by modulating the pattern for random access indicated by the signal based on whether or not the data has been correctly decoded, wherein the reply signal includes a first modulated pattern if the data has been correctly decoded and a second modulated pattern, different to the first modulated pattern, if the data has not been correctly decoded.

5. A radio terminal apparatus (2) comprising:
a reception unit (104) configured to receive a signal indicating a pattern for random access and data to be decoded by the radio terminal apparatus (2), the data and the signal having being simultaneously transmitted from a radio base station apparatus (1) to the radio terminal apparatus (2) not synchronized with the radio base station apparatus (1) on an uplink; and
a transmission unit (102) configured to transmit, to the radio base station apparatus (1) via a random access channel, a reply signal generated by modulating the pattern for random access indicated by the signal based on whether or not the data has been correctly decoded, wherein the reply signal includes a first modulated pattern if the data has been correctly decoded and a second modulated pattern, different to the first modulated pattern, if the data has not been correctly decoded.

6. A radio base station apparatus (1) comprising:
a transmission unit (201) configured to simultaneously transmit a signal indicating a pattern for random access and data to be decoded by an asynchronous radio terminal apparatus (2) to the asynchronous radio terminal apparatus (2), which is not synchronized with the radio base station apparatus (1) on an uplink; and
a reception unit (204) configured to receive, via a random access channel, a reply signal generated by modulating the pattern for random access indicated by the signal based on whether or not the data has been correctly decoded, the reply signal including a first modulated pattern if the data has been correctly decoded and a second modulated pattern, different to the first modulated pattern, if the data has not been correctly decoded.

## Patentansprüche

1. Verfahren zur Funkdatenübertragung in einem Funkkommunikationssystem, das eine Funk-Endvorrichtung (2) und eine Funk-Basisstationsvorrichtung (1) beinhaltet, wobei das Verfahren umfasst:
gleichzeitiges Übertragen, durch die Funk-Basisstationsvorrichtung (1), eines Signals, das ein Muster für einen Zufallszugriff angibt, und von Daten, die durch eine asynchrone Funk-Endvorrichtung (2) zu decodieren sind, die nicht mit der Funk-Basisstationsvorrichtung (2) synchronisiert ist, auf einer Aufwärtsstrecke zu der asynchronen Funk-Endvorrichtung (2), falls ein Ereignis auftritt, bei dem die Funk-Basisstationsvorrichtung (1) die Daten zu der asynchronen Funk-Endvorrichtung (2) überträgt; und
Übertragen, durch die asynchrone Funk-Endvorrichtung (2) an die Funk-Basisstationsvorrichtung (1) über einen Zufallszugriffkanal, eines Antwortsignals, das generiert wird, indem basierend darauf, ob die Daten korrekt decodiert wurden oder nicht, das durch das Signal angegebene Muster für einen Zufallszugriff moduliert wird, wobei das Antwortsignal ein erstes moduliertes Muster, falls die Daten korrekt decodiert wurden, und ein sich von dem ersten modulierten Muster unterscheidendes zweites moduliertes Muster, falls die Daten nicht korrekt decodiert wurden, beinhaltet.

2. Verfahren zur Funkdatenübertragung nach Anspruch 1, wobei das Muster für den Zufallszugriff eine Präambel zur Verwendung bei der Herstellung einer Synchronisierung eines synchronen Kanals ist.

3. Verfahren zur Funkdatenübertragung nach Anspruch 2, wobei die Funk-Basisstationsvorrichtung (1) ein Anforderungssignal, das die Übertragung der Präambel in Verbindung mit der Übertragung der Daten anfordert, zu der asynchronen Funk-Endvorrichtung (2) überträgt.

4. Kommunikationssystem (100), umfassend eine Funk-Basisstationsvorrichtung (1) und eine Funk-Endvorrichtung (2),
wobei die Funk-Basisstationsvorrichtung (1) eine Übertragungseinheit (201) umfasst, die dafür ausgelegt ist, ein Signal, das ein Muster für einen Zufallszugriff angibt, und Daten, die durch die Funk-Endvorrichtung (2) zu decodieren sind, gleichzeitig zu der Funk-Endvorrichtung (2) zu übertragen, falls ein Ereignis auftritt, bei dem die Funk-Basisstationsvorrichtung (1) die Daten zu der Funk-Endvorrichtung (2), wobei die Funk-Endvorrichtung (2) nicht mit der Funk-Basisstationsvorrichtung (1) synchronisiert ist, auf einer Aufwärtsstrecke überträgt; und
wobei die Funk-Endvorrichtung (2) eine Übertragungseinheit (102) umfasst, die dafür ausgelegt ist, zu der Funk-Basisstationsvorrichtung (1) über einen Zufallszugriffkanal ein Antwortsignal zu übertragen, das generiert wird, indem basierend darauf, ob die Daten korrekt decodiert wurden oder nicht, das Muster für einen Zufallszugriff moduliert wird, das durch das Signal angegeben wird, wobei das Antwortsignal ein erstes moduliertes Muster, falls die Daten korrekt decodiert wurden, und ein sich von dem ersten modulierten Muster unterscheidendes zweites moduliertes Muster, falls die Daten nicht korrekt decodiert wurden, beinhaltet.

5. Funk-Endvorrichtung (2), umfassend:
eine Empfangseinheit (104) die dafür ausgelegt ist, ein Signal, das ein Muster für einen Zufallszugriff angibt, und Daten, die durch die Funk-Endvorrichtung (2) zu decodieren sind, zu empfangen, wobei die Daten und das Signal gleichzeitig auf einer Aufwärtsstrecke von einer Funk-Basisstationsvorrichtung (1) zu der Funk-Endvorrichtung (2), die nicht mit der Funk-Basisstationsvorrichtung (1) synchronisiert ist, übertragen wurden; und
eine Übertragungseinheit (102), die dafür ausgelegt ist, zu der Funk-Basisstationsvorrichtung (1) über einen Zufallszugriffkanal ein Antwortsignal zu übertragen, das generiert wird, indem basierend darauf, ob die Daten korrekt decodiert wurden oder nicht, das Muster für einen Zufallszugriff moduliert wird, das durch das Signal angegeben wird, wobei das Antwortsignal ein erstes moduliertes Muster, falls die Daten korrekt decodiert wurden, und ein sich von dem ersten modulierten Muster unterscheidendes zweites moduliertes Muster, falls die Daten nicht korrekt decodiert wurden, beinhaltet.

6. Funk-Basisstationsvorrichtung (1), umfassend:
eine Übertragungseinheit (201), die dafür ausgelegt ist,
ein Signal, das ein Muster für einen Zufallszugriff angibt, und Daten, die durch eine asynchrone Funk-Endvorrichtung (2) zu decodieren sind, gleichzeitig auf einer Aufwärtsstrecke zu der asynchronen Funk-Endvorrichtung (2), die nicht mit der Funk-Basisstationsvorrichtung (1) synchronisiert ist, zu übertragen; und
eine Empfangseinheit (204), die dafür ausgelegt ist, über einen Zufallszugriffkanal, ein Antwortsignal zu empfangen, das generiert wird, indem basierend darauf, ob die Daten korrekt decodiert wurden oder nicht, das Muster für einen Zufallszugriff moduliert wird, das durch das Signal angegeben wird, wobei das Antwortsignal ein erstes moduliertes Muster, falls die Daten korrekt decodiert wurden, und ein sich von dem ersten modulierten Muster unterscheidendes zweites moduliertes Muster, falls die Daten nicht korrekt decodiert wurden, beinhaltet.

## Revendications

1. Procédé de transmission de données radio dans un système de radiocommunication comprenant un appareil de terminal radio (2) et un appareil de station de base radio (1), le procédé comprenant les étapes consistant à :
transmettre simultanément, par l'intermédiaire de l'appareil de station de base radio (1), un signal indiquant un motif pour un accès aléatoire et des données à décoder par un appareil de terminal radio asynchrone (2) non synchronisé avec l'appareil de station de base radio (2) sur une liaison montante à l'appareil de terminal radio asynchrone (2) si un événement se produit lorsque l'appareil de station de base radio (1) transmet les données à l'appareil de terminal radio asynchrone (2) ; et
transmettre, par l'intermédiaire de l'appareil de terminal radio asynchrone (2) à l'appareil de station de base radio (1) via un canal d'accès aléatoire, un signal de réponse généré en modulant le motif indiqué par le signal d'accès aléatoire en fonction que les données aient ou non été correctement décodées, le signal de réponse comprenant un premier motif modulé si les données ont été correctement décodées et un second motif modulé, différent du premier motif modulé, si les données n'ont pas été correctement décodées.

2. Procédé de transmission de données radio selon la revendication 1, dans lequel le motif pour l'accès aléatoire est un préambule à une utilisation pour l'établissement d'une synchronisation d'un canal synchrone.

3. Procédé de transmission de données radio selon la revendication 2, dans lequel l'appareil de station de base radio (1) transmet un signal de demande demandant la transmission du préambule conjointement avec la transmission des données à l'appareil de terminal radio asynchrone (2).

4. Système de communication (100) comprenant un appareil de station de base radio (1) et un appareil de terminal radio (2),
dans lequel l'appareil de station de base radio (1) comprend une unité de transmission (201) configurée pour transmettre simultanément un signal indiquant un motif d'accès aléatoire et des données à décoder par l'appareil de terminal radio (2) à l'appareil de terminal radio (2) si un événement se produit lorsque l'appareil de station de base radio (1) transmet les données à l'appareil de terminal radio (2), dans lequel l'appareil de terminal radio (2) n'est pas synchronisé avec l'appareil de station de base radio (1) sur une liaison montante ; et
l'appareil de terminal radio (2) comprend une unité de transmission (102) configurée pour transmettre, à l'appareil de station de base radio (1) via un canal d'accès aléatoire, un signal de réponse généré en modulant le motif pour un accès aléatoire indiqué par le signal basé selon que les données aient été correctement décodées ou non, dans lequel le signal de réponse comprend un premier motif modulé si les données ont été correctement décodées et un second motif modulé, différent du premier motif modulé, si les données n'ont pas été correctement décodées.

5. Appareil de terminal radio (2) comprenant :
une unité de réception (104) configurée pour recevoir un signal indiquant un motif pour un accès aléatoire et des données à décoder par l'appareil de terminal radio (2), les données et le signal étant transmis simultanément à partir d'un appareil de station de base radio (1) à l'appareil terminal radio (2) non synchronisé avec l'appareil de station de base radio (1) sur une liaison montante ; et
une unité de transmission (102) configurée pour transmettre, à l'appareil de station de base radio (1) via un canal d'accès aléatoire, un signal de réponse généré en modulant le motif pour un accès aléatoire indiqué par le signal selon que les données aient été ou non correctement décodées, dans lequel le signal de réponse comprend un premier motif modulé si les données ont été correctement décodées et un second motif modulé, différent du premier motif modulé, si les données n'ont pas été correctement décodées.

6. Appareil de station de base radio (1) comprenant :
une unité de transmission (201) configurée pour transmettre simultanément un signal indiquant un motif d'accès aléatoire et des données à décoder par un appareil de terminal radio asynchrone (2) à l'appareil de terminal radio asynchrone (2), qui n'est pas synchronisé avec l'appareil de station de base radio (1) sur une liaison montante ; et
une unité de réception (204) configurée pour recevoir, via un canal d'accès aléatoire, un signal de réponse généré en modulant le motif pour un accès aléatoire indiqué par le signal selon que les données aient été correctement décodées ou non, le signal de réponse comprenant un premier motif modulé si les données ont été correctement décodées et un second motif modulé, différent du premier motif modulé, si les données n'ont pas été correctement décodées.
